**Europäisches Patentamt**

**European Patent Office**

**Office européen des brevets**

(11) Veröffentlichungsnummer: **0 166 861**
**A2**

(12) # EUROPÄISCHE PATENTANMELDUNG

(21) Anmeldenummer: **85102578.3**

(22) Anmeldetag: **07.03.85**

(51) Int. Cl.⁴: **H 04 N 5/92**

(30) Priorität: **07.06.84 DE 3421197**

(43) Veröffentlichungstag der Anmeldung:
**08.01.86 Patentblatt 86/2**

(84) Benannte Vertragsstaaten:
**AT DE FR GB IT**

(71) Anmelder: **Blaupunkt-Werke GmbH**
**Robert-Bosch-Strasse 200**
**D-3200 Hildesheim(DE)**

(72) Erfinder: **Fricke, Walter**
**Baumhof 12**
**D-3201 Wesseln(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) **Verfahren zur Aufnahme eines Fernsehsignals.**

(57) Zur Erzielung einer Hi-Fi-Tonqualität wird bei Hi-Fi-Videorecordern der Ton im Schägspurverfahren aufgezeichnet. Solche Recorder eignen sich auch dazu, ausschließlich einen NF-Ton auf der Videocassette mit hoher Qualität aufzuzeichnen. Allerdings kann die entsprechende Videocassette dann nachträglich nicht mehr für die Aufzeichnung einer Fernsehsendung benutzt werden, ohne daß der aufgezeichnete Ton gelöscht wird.

Durch die Erfindung wird ein Aufnahmeverfahren vorgestellt, welches es gestattet, eine Videocassette, auf der sich bereits im Schrägspurverfahren eine Tonaufnahme befindet, im nachhinein auch noch für die Aufzeichnung einer Fernsehsendung zu verwenden. Dabei wird der im Fernsehsignal enthaltene Ton auf der Linearspur des Videobandes aufgezeichnet, und die Synchronisierung des Bandvorschubs erfolgt durch auf der Steuerspur des Videobandes befindliche Steuersignale.

EP 0 166 861 A2

PLI-Hi Eilers/TEX2-0d          - 1 -                    29.5.1984
                                                       R.Nr. 1817

Verfahren zur Aufnahme eines Fernsehsignals

Die Erfindung betrifft ein Verfahren zur Aufnahme eines Fernsehsignals mit einem sogenannten HiFi-Videorecorder, der zusätzlich zu den Videoköpfen, dem Steuerspurkopf und dem Längsspurtonkopf mit Schrägspurtonköpfen ausgerüstet ist und einem Vollspurlöschkopf sowie einen Videosignaldetektor umfaßt. Außerdem befaßt sich die Erfindung mit einem Videorecorder zur Durchführung des Verfahrens.

Bei den herkömmlichen Videorecordern wird das eigentliche Videosignal mit speziellen Videoköpfen im Schrägspurverfahren aufgezeichnet, während für den zugehörigen NF-Ton ein Längsspurtonkopf vorgesehen ist, um das Tonsignal - wie bei Tonbandgeräten üblich - auf einer linearen Längsspur des Videobandes aufzunehmen.

Während das Schrägspurverfahren auch bei der relativ geringen Bandgeschwindigkeit des Videobandes der Videocassette noch die Verarbeitung hoher Frequenzen gestattet, genügt die Aufnahme und Wiedergabe des NF-Tons über die Längsspur wegen der geringen Bandgeschwindigkeit nicht den erhöhten Anforderungen und Ansprüchen, wie sie bei einer HiFi-Anlage üblich sind.

Man verarbeitet deshalb bei neueren Videorecordern, die als HiFi-Videorecorder bezeichnet werden, auch den NF-Ton im Schrägspurverfahren, wodurch sich die Tonqualität entscheidend verbessern läßt und HiFi-Ansprüchen ohne weiteres gerecht wird. Außerdem ist es dann ebenfalls möglich, zwei Ton-

...

kanäle zu verarbeiten, so daß auch qualitativ hochwertige Stereo-Aufnahmen realisiert werden können, was angesichts des schon eingeführten
Stereo-Fernsehens mit Stereo-Ton ein bedeutsames Merkmal ist.

Bei diesen HiFi-Videorecordern werden zwei FM-Tonträger mit den Signalen
der niederfrequenten Stereo-Kanäle moduliert, und für die Aufzeichnung
bzw. Wiedergabe sind zusätzlich zu den Videoköpfen zwei FM-Tonköpfe vorgesehen.

Wenn hierbei auch die Längsspur für die Tonaufzeichnung nicht mehr benötigt
wird, so besitzen die HiFi-Videorecorder dennoch weiterhin einen Längsspurtonkopf. Dies ist aus Gründen der Kompatibilität wichtig, um auf den HiFi-
Videorecordern auch solche Videocassetten abspielen zu können, bei denen
sich der Ton noch auf der Längsspur befindet, die also mit älteren oder
Mono-Videorecordern aufgezeichnet worden sind.

Die HiFi-Videorecorder besitzen daher einen FM-Tonträgerdetektor, um bei
Wiedergabe einer eingelegten Videocassette erkennen zu können, ob der Ton
nach dem neueren Aufzeichnungsverfahren aufgenommen wurde, oder ob der
Ton noch auf der Längsspur enthalten ist. Wenn der FM-Tonträgerdetektor
einen FM-Tonträger erkennt, wird dieser verarbeitet, während im anderen
Fall auf die Längsspur umgeschaltet wird.

Im übrigen wird umgekehrt bei den neueren HiFi-Videorecordern der Ton nicht
nur in den Schrägspuren, sondern daneben auch noch in üblicher Weise auf

mindestens einer Längsspur aufgezeichnet, damit umgekehrt ein Videoband,
welches mit einem HiFi-Videorecorder aufgezeichnet wurde, auch auf einem
älteren Videorecorder abgespielt werden kann.

Da bei den HiFi-Videorecordern die erzielbare Tonqualität so hervorragend
ist, bieten die Gerätehersteller über einen externen NF-Anschluß sogar
die Möglichkeit an, die Videocassette bzw. das Videoband ausschließlich
für die NF-Aufnahme und NF-Wiedergabe - also wie ein übliches Tonband -
zu verwenden. Diese zusätzliche Nutzungsmöglichkeit ist für den Benutzer
bisher mit Nachteilen behaftet.

Als ungünstig ist vor allem der Umstand anzusehen, daß die ausschließlich
für einen NF-Ton benutzte Videocassette anschließend nicht mehr für die
Aufzeichnung eines Fernsehsignals verwendet werden kann, weil die vorhandene Tonaufzeichnung dann gelöscht wird. Der Konsument benötigt daher
eine erhöhte Anzahl von Videocassetten, von denen die ausschließlich mit
NF-Signalen bespielten Cassetten zudem noch als schlecht ausgenutzt anzusehen sind, weil ihre Eignung auch zur Aufzeichnung von Videosignalen nicht
genutzt ist.

Hier setzt die Erfindung ein, der die Aufgabe einer besseren wirtschaftlicheren Ausnutzung der Videocassetten und ihre Anwendungsmöglichkeiten
zugrunde liegt. Außerdem soll durch die Erfindung ein Videorecorder
zur Durchführung des Verfahrens angegeben werden.

0166861

Die Lösung dieser Aufgabe erfolgt bei dem im Oberbegriff des Anspruchs 1 genannten Verfahren durch die Merkmale des kennzeichnenden Teils des Anspruchs 1.

Durch die erfindungsgemäßen Verfahrensschritte ist es erstmals möglich, ein bereits mit einem NF-Signal - vorzugsweise ein HiFi-Stereo-Signal - in der Schrägspur bespieltes Videoband nachträglich auch noch für die Aufzeichnung eines Fernsehsignals mittels des Videorecorders verwenden zu können. Mit anderen Worten bedeutet dies, daß die schon mit einem Stereo-Signal bespielte Videocassette wie eine übliche Videocassette verwendet werden kann, denn bei der nachträglichen Aufzeichnung eines Fernsehsignals wird das bereits auf dem Videoband in den Schrägspuren vorhandene Tonsignal nicht gelöscht.

Gegenüber den bisherigen bekannten Aufnahmeverfahren bietet die Erfindung somit den Vorteil einer Doppelausnutzung der Videocassetten, auf denen neben einer HiFi-Tonaufnahme nachträglich ein Fernsehsignal einschließlich des dazugehörigen Tones aufgenommen werden kann. Dabei erfolgt die Aufzeichnung des im Fernsehsignal enthaltenen Tones auf der Längsspur des Videobandes, während das eigentliche Videosignal nach wie vor in den Schrägspuren aufgezeichnet wird, ohne daß dabei der bereits aufgezeichnete Stereoton beeinträchtigt wird. Beim Abspielen einer derart aufbereiteten Videocassette kann der Benutzer dann zwischen einer aufgezeichneten Fernsehsendung oder den aufgenommenen niederfrequenten Stereo-Signalen wählen.

PLI-Hi Eilers/TEX2-Od — 5 — 29.5.1984
R.Nr. 1817

Neben dieser bequemen Doppelausnutzung führt die Erfindung für den
Konsumenten auch zu einem erheblichen Kostenvorteil, da er entsprechend
weniger Videocassetten benötigt.

Bei der Erfindung wird von der Erkenntnis ausgegangen, daß sich trotz
der in den Schrägspuren schon vorhandenen FM-Tonträger für den Stereoton
nachträglich noch ein Videosignal aufzeichnen läßt, wobei entscheidend ist,
daß dabei das bereits vorhandene Tonsignal nicht gelöscht wird. Dies ist
auf die unterschiedliche Eindringtiefe bei der Aufnahme bzw. beim Magnetisieren der Magnetschicht des Videobandes zurückzuführen. Diese Eindringtiefe hängt nämlich außer vom Aufsprechstrom auch entscheidend von der
Frequenz des aufzuzeichnenden Signals ab, wobei die Eindringtiefe mit zunehmender Signalfrequenz geringer wird.

Die Eindringtiefe der FM-Tonträger ist daher relativ groß, während die
Videosignale mit der höheren Frequenz demgegenüber nur eine relativ geringe
Eindringtiefe besitzen. Deshalb, und durch die unterschiedlichen Azimut-
Winkel für FM-Audio- und Videoköpfe, kann nachträglich auf den bereits mit

0166861

R.Nr. 1817

FM-Tonträgern aufgezeichneten Schrägspuren noch ein Videosignal aufgenommen werden.

Ein wesentliches Merkmal der Erfindung besteht darin, daß der synchrone Bandvorschub bei der nachträglichen Aufzeichnung eines Videosignals von den Steuersignalen in der Steuerspur gewährleistet wird, obwohl sich der Videorecorder in einer Aufnahme-Betriebsart befindet.

Bekanntlich muß bei einem Videorecorder bei Aufnahme die richtige Lage der Bildspuren und bei Wiedergabe die richtige Zuordnung von Videokopf und Bildspur gewährleistet sein. Zu diesem Zweck wird mittels des Vertikal-Impulses eine Synchronisierung vorgenommen, welche eine Beeinflussung des Kopfrades des Videokopfes bewirkt, so daß der Videokopf in dem Augenblick eine Bandlücke passiert, in welchem der Bildwechselimpuls eintrifft. Dies bedeutet mit anderen Worten, daß die Bandlücken genau in die Bildaustastlücke des Fernsehbildes fallen. Gleichzeitig wird auch der Bandvorschub - also der Capstan-Motor - mittels des Vertikal-Impulses synchronisiert, und der Vertikal-Impuls wird bei der Betriebsart Aufnahme auf der Steuerspur des Videobandes als Steuersignal aufgezeichnet.

Die Lage der Synchronisierimpulse bzw. der Steuersignale

haben nach der Aufnahme also einen festen mechanischen
Bezug zu den Videospuren (Schrägspuren), und dieser
Bezug ist nach Beendigung der Aufnahme unveränderlich
und in etwa mit der Perforation beim Film gleichzusetzen. Man bezeichnet daher die Aufnahme der Steuersignale auf der Steuerspur auch als "magnetische Perforation". Bei der Wiedergabe werden die Steuersignale
von dem Steuerspurkopf gelesen, um den Bandvorschub zu
synchronisieren.

Bei der Erfindung wird demgegenüber die Steuerspur in
der Betriebsart "reduzierte Aufnahme" gelesen, um den
Bandvorschub zu synchronisieren, wenn ein bereits mit
NF-Stereo-Signalen bespieltes Videoband nachträglich
mit einem Fernsehsignal beaufschlagt werden soll. Dabei sind die Steuersignale zuvor schon auf der Steuerspur während der Aufnahme der NF-Stereosignale aufgezeichnet worden.

Es ist zwar beim elektronischen Bildschnitt - und hier
beim "Insert-Betrieb" (Ersetzen eines Teils einer alten
Aufnahme durch eine neue Aufnahme) - ansich schon bekannt, daß während des Einfügens einer neuen Aufnahme
die Steuersignale der Steuerspur für die Synchronisation
herangezogen werden, allerdings wird hierbei das alte
Videosignal einfach mit dem neuen Videosignal überschrieben, und zwar mit einem erheblich verstärkten Pegel, so daß das alte Videosignal unterdrückt und im Wiedergabebetrieb nur noch das neue Videosignal sichtbar wird.

Demgegenüber bleibt bei der Erfindung das zuvor aufgezeichnete NF-Stereosignal erhalten, wenn auf dem Videoband nachträglich ein Fernsehsignal aufgezeichnet wird. Sowohl das Tonsignal als auch das nachträglich aufgenommene Videosignal stehen also nach der Aufnahme für die Wiedergabe zur Verfügung.

Zweckmäßige Ausgestaltungen und vorteilhafte Weiterbildungen des erfindungsgemäßen Verfahrens sind in den Unteransprüchen angegeben.

Ein Videorecorder mit den Merkmalen des Oberbegriffs des Anspruchs 7 zur Durchführung des Verfahrens umfaßt einen nach dem Start einer Aufnahme aktivierbaren Betriebsartenumschalter, mit welchem der Videorecorder neben den Betriebsarten "Wiedergabe", "Aufnahme", in die Betriebsart einer "reduzierten Aufnahme" schaltbar ist, wobei der Betriebsartenumschalter von einer Identifizierungsschaltung zur Auswertung des Videobandes angesteuert ist.

Wenn bei dem erfindungsgemäßen Videorecorder die Betriebs-

art "Aufnahme" von dem Benutzer eingeschaltet wird,
erfolgt mittels des Betriebsartenumschalters zunächst
zwangsweise eine Umschaltung in die Betriebsart "Wiedergabe", um eine Identifizierung des eingelegten Videobandes vornehmen zu können. Handelt es sich um eine
unbespielte und damit leere Videocassette, erfolgt
anschließend die Aufnahme einer Fernsehsendung in an
sich bekannter Weise; der Fernsehton wird hier also
im Schrägspurverfahren aufgezeichnet.

Ergibt die Identifizierung hingegen, daß auf dem eingelegten Videoband bereits ein hiederfrequentes Tonsignal im Schrägspurverfahren aufgezeichnet wurde und
kein Fernsehsignal vorhanden ist, wird bei der anschließenden Aufnahme eines Fersehsignals der Fernsehton auf der Längsspur aufgezeichnet.

Vorteilhafte Weiterbildungen und Ausgestaltungen des
erfindungsgemäßen Videorecorders sind in den Unteransprüchen angegeben.

Nachfolgend wird die Erfindung an Hand des in der Zeichnung dargestellten Ausführungsbeispieles näher erläutert. Es zeigen:

Fig. 1      eine schematische Teildarstellung
eines Videobandes,

Fig. 2　　　　　eine teilweise Querschnittsansicht eines Videobandes längs
　　　　　　　　einer Schrägspur,

Fig. 3　　　　　ein Diagramm zur Verdeutlichung
　　　　　　　　der auf einem Videoband aufgenommenen Frequenzen,

Fig. 4　　　　　ein Flußdiagramm zur Erläuterung
　　　　　　　　der Verfahrensschritte gemäß der
　　　　　　　　Erfindung, und

Fig. 5　　　　　ein schematisches Blockschalt-
　　　　　　　　bild einer Schaltung zur Durch-
　　　　　　　　führung des erfindungsgemäßen
　　　　　　　　Verfahrens.

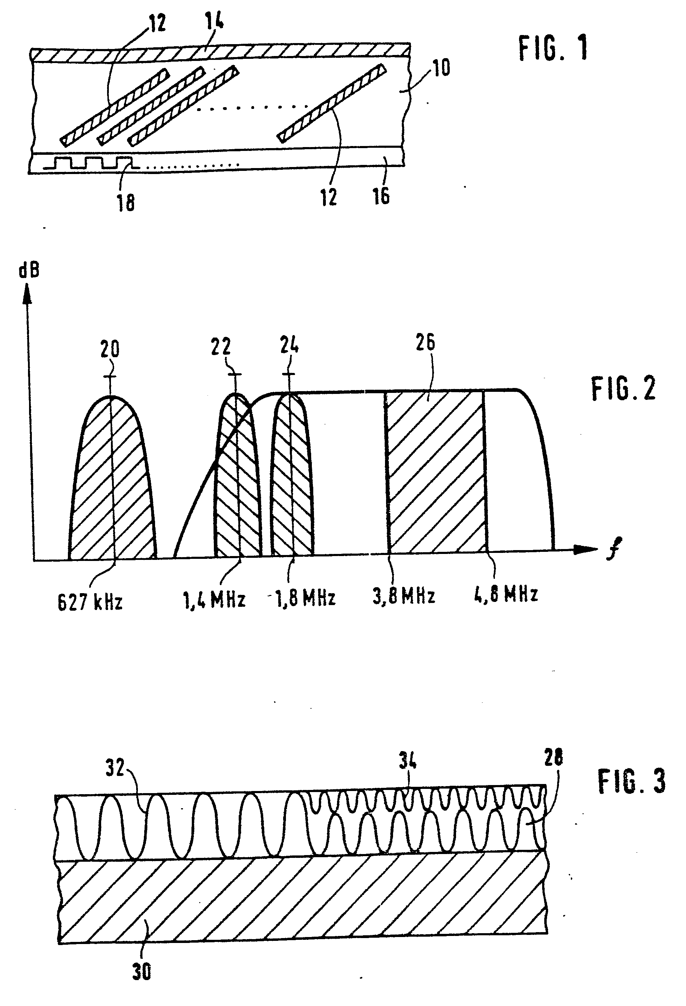

Zum besseren Verständnis der Erfindung wird nachfolgend
an Hand von Fig. 1 und 2 zunächst die Frequenzverteilung und Spuranordnung auf einem Videoband 10 erläutert.

Bei den üblichen Videorecordern wird bekanntlich auf den
Schrägspuren 12 mittels der Videoköpfe das Videosignal
aufgezeichnet, während der in dem aufzuzeichnenden Fernsehsignal enthaltene niederfrequente Ton auf der Längsspur 14 aufgenommen wird.

Demgegenüber erfolgt die Tonaufzeichnung bei den neueren Hi-Fi-Videorecordern im Schrägspurverfahren, und
wie in Fig. 2 zu erkennen ist, sind für die Stereo-
Kanäle zwei FM-Tonträger 22 und 24 vorgesehen, die bei
1,4 MHz für den linken Kanal und bei 1,8 MHz für den
rechten Kanal liegen. Im Bereich zwischen 3,8 MHz und
4,8 MHz bewegt sich         -Luminanzsignal 26, und
der Farbträger 20 liegt bei 627 kHz.

Die Erfindung geht also von einem neueren Hi-Fi-Videorecorder aus, für den das in Fig. 2 gezeigte Frequenzspektrum gilt, bei dem also die Tonaufzeichnung im
Schrägspurverfahren mit den beiden FM-Tonträgern 22, 24
unter Verwendung zweier FM-Tonköpfe möglich ist.

Es ist darauf hinzuweisen, daß die neuen Hi-Fi-Videorecorder gleichwohl auch noch den üblichen Längsspurtonkopf besitzen, um bei solchen Videobändern, bei denen
der Ton auf der Längsspur 14 aufgezeichnet worden ist,
aus Gründen der Kompatibilität ein Abspielen der Videocassette zu ermöglichen.

In Fig. 1 ist noch zu erkennen, daß das Videoband 10
neben der Längsspur 14 und den Schrägspuren 12 noch eine bei der im Fernsehsignal enthaltene Ton auf der Längsspur 14 aufgenommen und das Videosignal in üblicher
Weise im Schrägspurverfahren aufgezeichnet wird, ohne
daß dadurch die schon vorhandene Tonaufnahme verloren
geht.

Zur Verdeutlichung dieser bei der Erfindung angewandten
Technik wird auf Fig. 3 Bezug genommen, welche längs
einer Schrägspur 12 eine Querschnittsansicht eines Videobandes 10 zeigt. Das Videoband 10 besitzt ein unteres Trägermaterial 30 mit einer darüber befindlichen
Magnetschicht 28. Mit der Bezugsziffer 32 ist ein im
Schrägspurverfahren aufgezeichneter Tonträger bezeichnet, während die Bezugsziffer 34 ein Videosignal bezeichnet.

Bei der Aufnahme bzw. Magnetisierung stellt sich eine
von dem            aufzunehmenden Signals abhängige
Eindringtiefe ein, wobei die Eindringtiefe in die Magnetschicht 28 mit zunehmender Frequenz abnimmt. Da die Frequenz des                              FM-Tonträger 32 im Vergleich zur Frequenz des Videosignals 34
relativ gering ist, stellt sich bei dem   Signal 32 eine größere Eindringtiefe ein.

Im rechten Teil der Fig. 3 ist zu erkennen, wie relativ

0166861

R.Nr. 1817

gering die Eindringtiefe bei einem nachträglich auf
dem Videoband 10 aufgezeichneten Videosignal 34 ist.
Der bereits vorhandene Tonträger 32 wird zwar bei
der nachträglichen Aufzeichnung des Videosignals 34
etwas "gestaucht", dennoch bleibt der Tonträger 32
erhalten, so daß er wiedergegeben werden kann.

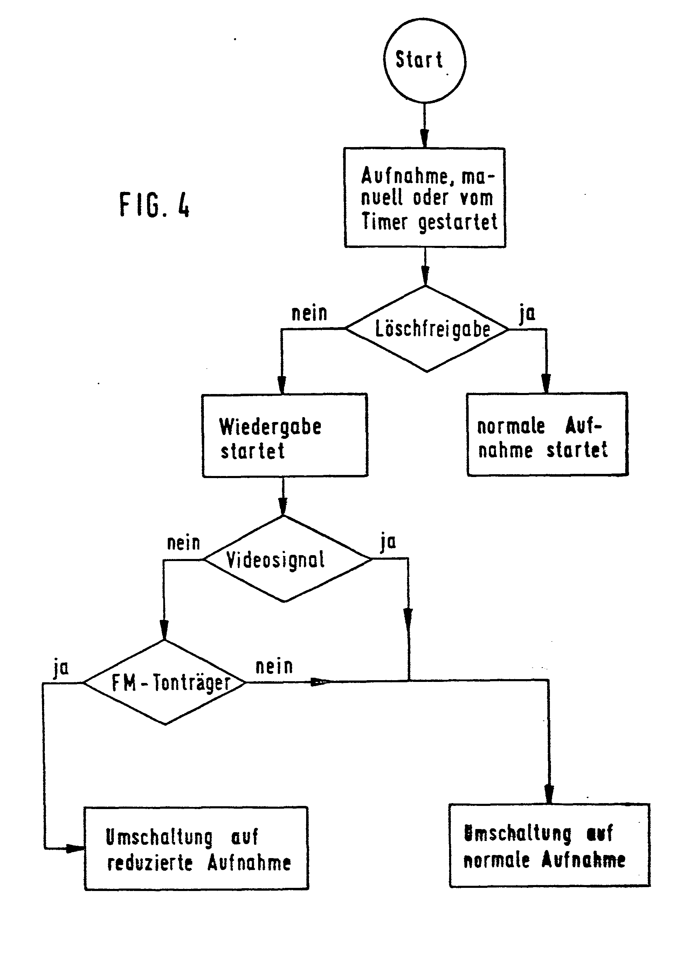

Anhand des in Fig. 4 dargestellten Flußdiagrammes
läßt sich das erfindungsgemäße Verfahren besonders
deutlich beschreiben. Dabei wird von der Annahme ausgegangen, daß in einen Hi-Fi-Videorecorder eine Videocassette eingelegt ist und daß die Betriebsart "Aufnahme"
entweder manuell oder auch automatisch vom Timer eingestellt ist und die Aufnahme gestartet wird.

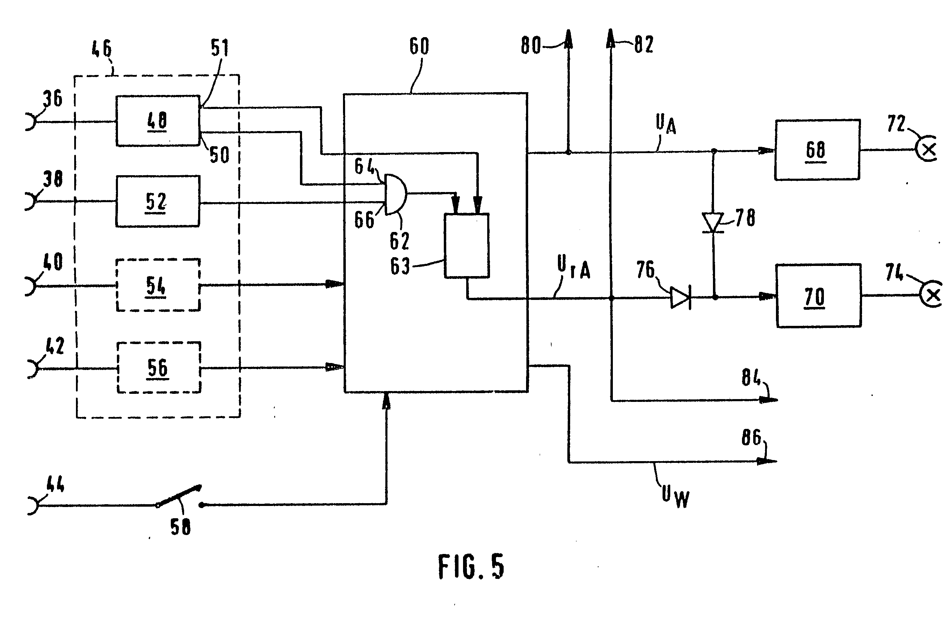

Wenn der Löschfreigabeschalter 58 (vgl. Fig. 5) geschlossen ist und damit eine Löschfreigabe für auf dem eingelegten Videoband vorhandene Aufzeichnungen signalisiert,
arbeitet der Hi-Fi-Videorecorder in üblicher Weise, d.h.,
die Aufnahme zur Aufzeichnung eines Fernsehsignals wird
gestartet.

Ist der Löschfreigabeschalter 58 hingegen nicht geschlossen, wird der Betriebsartenumschalter 60 (vgl. ebenfalls
Fig. 5) wirksam, und zwar in der Weise, daß der Hi-Fi-
Videorecorder trotz der anfangs betätigten Aufnahmetaste

0166861

R.Nr. 1817

für eine gewisse Zeitdauer in den Wiedergabebetrieb
umgeschaltet wird. In dieser Betriebsart erfolgt jetzt
eine Identifizierung des eingelegten Videobandes.

Zunächst wird festgestellt, ob auf dem Videoband bereits ein Videosignal aufgezeichnet ist. Hierzu dient
innerhalb einer Identifizierungsschaltung 46 ein binärer Videosignaldetektor 48. Wenn nun die Überprüfung
zu dem Ergebnis führt, daß sich auf dem Videoband ein
Videosignal befindet, so bedeutet dies im Umkehrschluß,
daß es sich um ein solches Videoband handelt, welches
nicht ausschließlich mit einem niederfrequenten Ton beaufschlagt ist. Deshalb bewirkt der Betriebsartenumschalter 60 in diesem Fall eine Umschaltung in die normale Betriebsart "Aufnahme", und von diesem Zeitpunkt
an arbeitet der Hi-Fi-Videorecorder in üblicher Weise.

Ergibt die Auswertung hingegen, daß kein Videosignal
auf dem Videoband aufgezeichnet ist, erfolgt mittels
der Identifizierungsschaltung 46 eine weitere Überprüfung

, welche
das Vorhandensein von Steuersignalen 18 auf der Steuerspur 16 (vgl. Fig. 1) feststellt. Wenn nämlich zuvor auf dem Videoband eine ausschließliche Tonaufzeichnung im Schrägspurverfahren erfolgt ist, sind in der Steuerspur 16 Steuersignale 18 vorhanden.

Für die Erkennung von Tonsignalen in den Schrägspuren kann im übrigen auch der gestrichelt gezeichnete Tonsignaldetektor 54 herangezogen werden, der mit dem weiter oben schon erwähnten FM-Tonträgerdetektor übereinstimmen kann.

Ferner ist es auch möglich, für die Identifizierung eines auf dem Videoband vorhandenen Tonsignals einen in Fig. 5 gestrichelt gezeichneten Kontrollsignaldetektor 56 vorzusehen, der mit einer Buchse 42 verbunden ist. Bei dieser Lösung wird

ein zusätzlich erzeugtes Kontrollsignal ausgewertet. Das Kontrollsignal wird während der vorangegangenen "Nur-Ton-Aufzeichnung" als ein im Niederfrequenzbereich liegendes Signal auf der Längsspur 14 aufgezeichnet.

Die Verwendung eines solchen Kontrollsignals und die Auswertung über den Kontrollsignaldetektor 56 haben den Vorteil, daß eine Auswertung auch bei verstelltem Trackingregler (Spurregler) erfolgen kann, während hier bei der Auswertung der FM-Tonträger 18, 20 unter Umständen Unsicherheiten in der Erkennung auftreten könnten.

Wenn mittels des Steuersignaldetektors 52 , festgestellt wurde, daß auf dem Videoband kein FM-Tonträger vorhanden ist, erfolgt mittels des Betriebsartenumschalters 60 die Umschaltung in die Betriebsart der normalen Aufnahme.

In dem Fall allerdings, daß auf dem Videoband das Vorhandensein eines FM-Tonträgers festgestellt wird, wenn es sich also bei der eingelegten Videocassette um eine solche handelt, auf die bereits ein niederfrequentes Tonsignal aufgezeichnet worden ist, schaltet der Betriebsartenumschalter 60 den Hi-Fi-Videorecorder in eine als "reduzierte Aufnahme" bezeichnete Betriebsart um.

Das besondere bei der reduzierten Aufnahme besteht unter anderem darin, daß der Vollspurlöschkopf 72 in Fig. 5 nicht aktiviert wird (wie dies bei einer normalen Aufnahme der Fall wäre). Somit bleibt das niederfrequente Signal auf den Schrägspuren des Videobandes erhalten. Das Videosignal wird nun in an sich bekannter Weise ebenfalls im Schrägspurverfahren aufgezeichnet, während das im aufzunehmenden Fernsehsignal enthaltene
Tonsignal in der Betriebsart der reduzierten Aufnahme
auf der Längsspur aufgezeichnet wird.

Eine weitere Besonderheit besteht bei der reduzierten
Aufnahme darin, daß zur Synchronisation des Bandvorschubes die Steuersignale 18 auf der Steuerspur 16
gelesen und ausgewertet werden. Bei einer normalen
Aufnahme würden demgegenüber auf der Steuerspur 16
die Vertikal-Impulse als Steuersignal 18 aufgezeichnet
werden.

Mit der Erfindung ist es also möglich, auf einem Videoband, welches bereits im Schrägspurverfahren mit einem
niederfrequenten Tonsignal bespielt worden ist, nachträglich ein Fernsehsignal - und zwar einschließlich
des Fernsehtones - aufzuzeichnen, wobei das zuvor schon
aufgenommene Tonsignal bei der nachträglichen Aufzeichnung des Fernsehsignals nicht gelöscht wird. Dadurch
läßt sich eine optimale Ausnutzung des Videobandes erzielen.

Die erfindungsgemäßen Verfahrensschritte sind so gewählt, daß selbstverständlich - wie bisher schon üblich -
normale Aufnahmen eines Fernsehsignals mit einer unbespielten Videocassette vorgenommen werden können, da die

Identifizierungsschaltung 46 das eingelegte Videoband
vor dem Beginn der eigentlichen Aufnahme überprüft
und nur dann auf eine reduzierte Aufnahme umschaltet,
wenn sich auf dem Videoband eine zu schützende niederfrequente Ton-Sendung befindet.

Bei dem niederfrequenten Ton muß es sich übrigens nicht
zwangsläufig um ein Stereo-Signal handeln, obwohl dies
wegen der beiden FM-Tonträger 22, 24 besonders günstig
ist. Daneben können aber auf dem Videoband zuvor auch
ein oder zwei Monosignale aufgezeichnet sein.

Die bei der Erfindung vorgesehene Identifizierung eines
eingelegten Videobandes und die im Anschluß daran erfolgende Umschaltung in die Betriebsart der normalen
Aufnahme oder der reduzierten Aufnahme läßt sich innerhalb einer relativ kurzen Zeit vornehmen (z.B. 2 - 3 sec.),
so daß sich für den Benutzer keine Nachteile ergeben.
Übrigens ist der Benutzer schon von den bekannten Videorecordern her daran gewöhnt, daß nach Betätigung der
Aufnahmetaste wegen des Einfädelns des Videobandes
eine kurze Zeitspanne vergeht, bevor die eigentliche
Aufnahmefunktion startet. Diese bei einem Videorecorder typischen Abläufe wie Einfädeln, Prüfen der
Aufnahmesperre usw. sind aus Gründen der besseren Übersichtlichkeit im Flußdiagramm gemäß Fig. 4 nicht be-

R.Nr. 181 0166861

rücksichtigt.

In Fig. 5 ist ein schematisches Blockschaltbild eines
Teils eines Hi-Fi-Videorecorders zur Durchführung des
erfindungsgemäßen Verfahrens dargestellt. Nach dem
Start einer Aufnahme - manuell oder vom Timer - wird
der Hi-Fi-Videorecorder zunächst zwangsweise durch den
Betriebsartenumschalter 60 für wenige Sekunden in den
Wiedergabebetrieb umgeschaltet, um das eingelegt Videoband 10 zu identifizieren.

Im Wiedergabebetrieb (Erkennungsbetrieb) gelangt von
einem nicht dargestellten Videoleseverstärker über
einen Schaltungspunkt 36 ein Signal zu dem binären
Videosignaldetektor 48, welcher einen normalen Ausgang 51 und einen invertierten Ausgang 50 besitzt.
Letzterer ist mit dem einen Eingang 64 einer UND-
Stufe 62 verbunden, während der normale Ausgang 51
des binären Videosignaldetektors 48 zu einer Steuerstufe 63 führt. Der Ausgang der UND-Stufe 62 ist ebenfalls mit der Steuerstufe 63 verbunden.

Die Identifizierungsschaltung 46 umfaßt ferner einen
Steuersignaldetektor 52, welcher über einen elektrischen
Anschlußpunkt 38 von dem nicht dargestellten Steuersignalleseverstärker zum Lesen der Steuerspur 16 gespeist wird und anzeigt, ob sich auf der Steuerspur

Anschlußpunkt 40 angesteuerten Tonsignaldetektors 54 erfolgen, dessen Ausgang dann mit dem Eingang 66 der UND-Stufe 62 zu verbinden ist.

. In allen Fällen wird unter den weiter oben genannten Voraussetzungen eine Schaltspannung $U_{rA}$ für die Betriebsart der reduzierten Aufnahme erzeugt.

In Fig. 5 ist durch die Pfeile 80, 82, 84 und 86 angedeutet, daß der Betriebsartenumschalter 60 noch weitere Schaltspannungen für die Steuerung des Hi-Fi-Videorecorders erzeugt, die zur Erläuterung der Erfindung im vorliegenden Fall aber nicht von entscheidender Bedeutung sind. Es soll lediglich erwähnt werden, daß durch den Pfeil 86 eine Schaltspannung $U_W$ angegeben ist, durch welche die Betriebsart der Wiedergabe eingeschaltet wird.

Eine Schaltspannung $U_A$ für die normale Aufnahme gelangt zu dem Vollspurlöschoszillator 68, welcher bei der normalen Aufnahme voll wirksam ist. Die schon erwähnte Schaltspannung $U_{rA}$ für die reduzierte Aufnahme gelangt über eine Diode 76 zum Längsspurlöschoszillator 70. Die Eingänge des Vollspurlöschoszillators 68 und des

0166861

16 Steuersignale 18 befinden. Der Ausgang des Steuersignaldetektors 52 ist mit dem anderen Eingang 66
der UND-Stufe 62 verbunden.

Es sei jetzt angenommen, daß sich auf dem eingelegten
Videoband 10 ausschließlich ein Tonsignal in den Schrägspuren befindet. Wegen des dann fehlenden Videosignales
erscheint an dem invertierten Ausgang 50 des Videosignaldetektors 48 ein binäres Signal, während an dem
normalen Ausgang 51 kein Signal vorhanden ist. Ferner
wird der UND-Stufe 62 bzw. dem Eingang 66 von dem
Steuersignaldetektor 52 ein Signal zugeführt, weil der
Steuersignaldetektor 52 das Vorhandensein von Steuersignalen 18 feststellt. In diesem Fall ist die UND-
Bedingung der UND-Stufe 62 erfüllt, so daß ein Signal
an die Steuerstufe 63 geleitet wird, und als Folge davon schaltet der Betriebsartenumschalter 60 auf die Betriebsart der "reduzierten Aufnahme". Bei dieser reduzierten Aufnahme ist der Vollspurlöschoszillator 68
außer Betrieb, d.h., der Vollspurlöschkopf 72 wird
nicht aktiviert.

Voranstehend wurde der Steuersignaldetektor 52 herangezogen, um das Vorhandensein eines niederfrequenten
Tonsignals auf dem Videoband festzustellen. Diese Erkennung kann auch mit Hilfe des über einen elektrischen

PLI-Hi Eilers/TEX2-Cd                              29.5.1984
                                                   R.Nr. 1817

In der bei der Erfindung wesentlichen Betriebsart der reduzierten Aufnahme erhalten sowohl der Vollspurlöschkopf 72 sowie die FM-Tonköpfe kein Signal, damit die vorhandene Schrägspur-Tonaufzeichnung weder gelöscht noch beeinträchtigt wird. Es ist natürlich auch möglich, daß während der reduzierten Aufnahme die FM-Tonköpfe und die nachgeschalteten Leseverstärker auf Wiedergabe geschaltet sind, und das Signal der vorhandenen Tonaufzeichnung der Schrägspur an den NF-Ausgangsbuchsen zur Verfügung steht. Farbschlieren, wie sie vom weiter oben schon erwähnten Insert-Schnitt bekannt sind, treten bei der Erfindung nicht auf, da auf dem Videoband 10 ja noch kein Farbträgersignal aufgezeichnet gewesen ist.

Die Wiedergabe eines gemäß der Erfindung bespielten Videobandes 10 bereitet weiter keine Schwierigkeiten. Das Videosignal 34 sowie das Tonsignal der Längsspur 14 werden über einen angeschlossenen Fernseher wiedergegeben, während der auf den Schrägspuren aufgezeichnete niederfrequente Ton an die NF-Ausgänge des HiFi-Videorecorders geleitet werden kann. An diese Ausgänge läßt sich dann eine übliche HiFi-Anlage anschließen.

Längsspurlöschoszillators 70 sind über eine Diode 78 miteinander verbunden, so daß die Schaltspannung $U_A$ auch zum Längsspurlöschoszillator 70 gelangen kann, um den Längsspurkopf 74 zu aktivieren.

Der Betriebsartenumschalter 60 kann - einschließlich der dargestellten UND-Stufe 62 und der Steuerstufe 63 - als Mikroprozessor ausgebildet sein, dessen Logik in Abhängigkeit von der Ansteuerung durch die Identifizierungsschaltung 46 die jeweils benötigten Schaltspannungen für die unterschiedlichen Betriebsarten und für die Funktionsweise des Hi-Fi-Videorecorders erzeugt.

Die Schaltungsanordnung gemäß Fig. 5 besitzt noch einen Löschfreigabeschalter 58, an den über einen elektrischen Verbindungspunkt 44 eine Spannung anliegt. Bei geschlossenem Löschfreigabeschalter 58 gelangt diese Spannung zum Betriebsartenumschalter 60, und dies hat zur Folge, daß die voranstehend in dem Flußdiagramm gemäß Fig. 4 beschriebene Identifizierung nicht vorgenommen und der Hi-Fi-Videorecorder mit der normalen üblichen Aufnahme startet. Der Benutzer kann den Löschfreigabeschalter 58 also betätigen, wenn eine auf dem betreffenden Videoband schon vorhandene Tonaufzeichnung gelöscht werden kann.

Patentanspruch

1.  Verfahren zur Aufnahme eines Fernsehsignals mit einem HiFi-Video-
    recorder, der zusätzlich zu den Videoköpfen, dem Steuerspurkopf und
    dem Längsspurtonkopf mit Schrägspurtonköpfen ausgerüstet ist und
    einen Vollspurlöschkopf sowie einen Videosignal-Detektor umfaßt, mit
    einem dem Aufnahmebetrieb vorgeschalteten Wiedergabebetrieb, bei dem
    in der Steuerspur vorhandene Steuersignale die aufzunehmenden Videosignalquellen synchronisieren,
    dadurch gekennzeichnet,
    daß bei fehlenden Signalen am Ausgang des Videosignal-Detektors im
    Wiedergabebetrieb der Vollspurlöschkopf und die Schrägspurtonköpfe
    beim Übergang in den Aufnahmebetrieb außer Betrieb gesetzt werden und
    der Steuerspurkopf im Wiedergabebetrieb gehalten wird.

2.  Videorecorder mit Videoköpfen und daran angeschlossenen Videoschreib-
    und Leseverstärkern, mit mindestens einem Schrägspurtonkopf und einem
    Längsspurtonkopf und jeweils damit verbundenen Schreib- und Lese-
    verstärkern, mit einem Steuerspurkopf mit nachgeschalteten Schreib-
    und Leseverstärkern, mit einer Bandvorschubsteuerung, die von dem
    Leseverstärker des Steuerspurkopfes steuerbar ist, mit einem Vollspur-
    löschkopf und einem Längsspurlöschkopf sowie mit einem Betriebsarten-

...

umschalter, der in der Betriebsart Aufnahme für eine vorgegebene

Zeitdauer selbsttätig die Betriebsart Wiedergabe einschaltet zur Durchführung des Verfahrens nach A 1,

dadurch gekennzeichnet,

daß der Videorecorder durch den Betriebsartenumschalter (60) neben den Betriebsarten "Wiedergabe" und "Aufnahme", in die Betriebsart einer "reduzierten Aufnahme" schaltbar ist, und daß der Betriebsartenumschalter (60) von einer Identifizierungsschaltung (46) zur gleichzeitigen Auswertung des Videosingals (10) und des Steuerspursignals angesteuert ist.


3.  Videorecorder nach Anspruch 2,

    gekennzeichnet durch

    einem dem Videoleseverstärker nachgeschalteten binären Videosignal-

    detektor (48) mit einem normalen (51) und einem invertierten Aus-

    gang (50), einem dem Steuersignalleseverstärker nachgeschalteten

    binären Steuersignaldetektor (52), einer UND-Stufe (62), deren Eingänge (64, 66) mit dem invertierten Ausgang (50) des Videosignal-

    detektors (48) und dem Ausgang des Steuersignaldetektors (52) verbun-

    den sind, und einer Steuerstufe (63) für den Betriebsartenumschalter, die sowohl mit dem normalen Ausgang (51) des Videosignaldetektors (48) als auch mit dem Ausgang der UND-Stufe (62) verbunden ist, und die bei

    einem Signal am normalen Ausgang (51) des Videosignaldetektors (48) den Betriebsartenumschalter (60) in die Betriebsart Aufnahme zurückschaltet und bei einem Signal am Ausgang der UND-Stufe (62) beim

                                                              ...

Zurückschalten in den reduzierten Aufnahmebetrieb den Vollspurlöschkopf (72) und den Schrägspurtonkopf blockiert und die Bandvorschubsteuerung durch den Steuersignalleseverstärker aufrechterhält.


4.   Videorecorder nach Anspruch    ,

     dadurch gekennzeichnet,

     daß die Identifizierungsschaltung (46) einen Schrägspur-Tonsignaldetektor (54) umfaßt, dessen Ausgangssignal neben/oder anstelle des
     Ausgangssignals des Steuersignaldetektors (52) der UND-Stufe (62)
     zugeführt ist.


5.   Videorecorder nach Anspruch 3 oder 4,

     dadurch gekennzeichnet,

     daß die Identifizierungsschaltung (46) einen Kontrollsignal-
     detektor (56) umfaßt, dessen Ausgangssignal neben/oder anstelle des
     Ausgangssignals des Steuersignalsdetektors (52) der UND-Stufe (62)
     zugeführt ist.


6.   Videorecorder nach einem der vorhergehenden Ansprüche 2 oder 3,
     dadurch gekennzeichnet,
     daß der Betriebsartenumschalter (60) mit einem Löschfreigabeschalter (58) verbunden ist, durch dessen Betätigung der Betriebsartenumschalter (60) zwangsweise auf die Betriebsart "Aufnahme"
     schaltbar ist.

0166861

FIG. 1

FIG. 2

dB

20   22   24   26

627 kHz   1,4 MHz   1,8 MHz   3,8 MHz   4,8 MHz

FIG. 3

32   34   28

30

0166861

FIG. 4

Start

Aufnahme, manuell oder vom
Timer gestartet

Löschfreigabe

nein    ja

Wiedergabe
startet

normale Aufnahme startet

Videosignal

nein    ja

FM-Tonträger

ja    nein

Umschaltung auf
reduzierte Aufnahme

Umschaltung auf
normale Aufnahme

FIG. 5

0166861